# EUROPEAN PATENT APPLICATION

(11) **EP 1 887 642 A1**
(43) Date of publication of application: **13.02.2008**
(21) Application number: 06745484.3
(22) Date of filing: 20.04.2006
(51) Int. Cl.: H01M 4/86, H01M 4/92

(54) **ELECTRODE MATERIAL FOR FUEL CELL AND FUEL CELL**

(30) Priority: 25.05.2005 JP 2005152928
(71) Applicant: Nissan Motor Company Limited, Kanagawa-ku Yokohama-shi, Kanagawa 221-0023 (JP)
(72) Inventor: SUGA, Katsuo C/O NISSAN MOTOR CO.LTD ipdet, Kanagawa 243-0192 (JP)
(74) Representative: Schaeberle, Steffen
(86) International application number: PCT/JP2006/308303
(87) International publication number: WO 2006/126349

(57) **Abstract**

Materials of a fuel cell electrode are provided as a fuel cell electrode on front and/or rear surface of an electrolyte membrane 1, and include catalyst particles formed by including precious metal particles containing Pt in a porous inorganic material 3, and a proton-conductive substance. The precious metal particles 2 are included in the porous inorganic material 3, which can prevent Pt from dissolving into the electrolyte membrane 1 and also suppress deterioration in fuel cell performance caused by the Pt dissolution into the electrolyte membrane 1.

## Description

### TECHNICAL FIELD

The present invention relates to materials used to form a fuel cell electrode provided on front and/or rear surfaces of an electrolyte membrane, and a fuel cell having an electrode formed of the fuel cell electrode materials.

### BACKGROUND ART

As disclosed in Japanese Patent Laid-Open No. 2002-246033, there are known materials for a fuel cell electrode that include catalyst particles supporting precious metal particles of platinum (Pt) or alloy thereof on a catalyst support surface composed mainly of SiO₂, conductive particles, and a proton-conductive substance. With such materials for a fuel cell electrode, proton conductivity between the metal particles and the proton-conductive substance can be enhanced, and thereby electrical efficiency of the fuel cell can be increased.

The conventional materials for a fuel cell electrode are however disadvantageous, because the precious metal particles are exposed to the catalyst support surface, which causes damage to the electrolyte membrane when dissolution of Pt thereinto occurs, thereby possibly leading to deterioration in fuel cell performance. Furthermore, Pt sintering also likely declines the fuel cell performance. Moreover, when carbon supports corrode and are lost, Pt supported by the carbon support is liable to dissolve into the electrolyte membrane, which possibly causes further deterioration of the fuel cell performance.

The present invention has been made to solve this problem, and an object thereof is to provide materials for a fuel cell electrode that can prevent dissolution of the precious metal particles and suppress deterioration in fuel cell performance, and also to provide a fuel cell having an electrode formed of these fuel cell electrode materials.

### DISCLOSURE OF INVENTION

In order to solve the foregoing problem, a first aspect of the present invention is directed to materials for a fuel cell electrode that include catalyst particles formed by including precious metal particles containing Pt in a porous inorganic material, and a proton-conductive substance. A second aspect of the present invention is directed to materials for a fuel cell electrode that include catalyst particles formed by including precious metals particles containing Pt in a porous inorganic material, conductive particles, and a proton-conductive substance.

### BRIEF DESCRIPTION OF THE DRAWINGS

FIG. 1 is a schematic diagram showing a structure of materials for a fuel cell electrode according to an embodiment of the present invention.
FIG. 2 is a schematic diagram showing a structure in an application example of the fuel cell electrode materials of FIG. 1.
FIG. 3 is a TEM photograph of the fuel cell electrode materials according to the embodiment of the present invention.

### BEST MODE FOR CARRYING OUT THE INVENTION

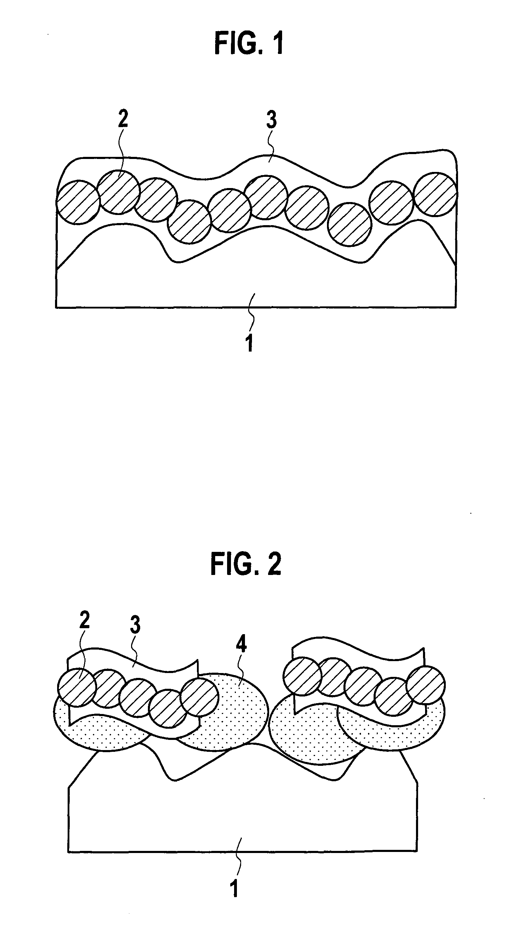

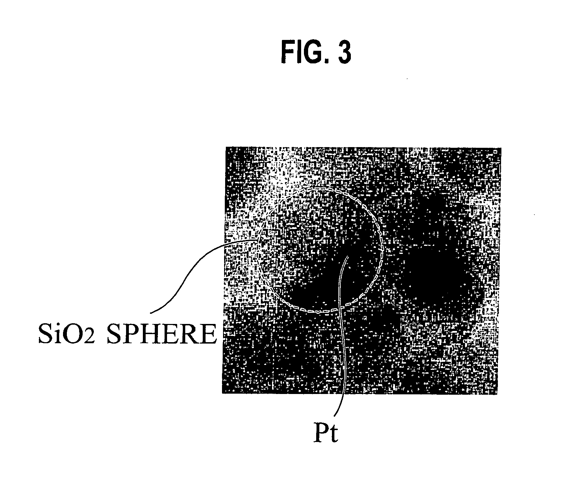

Referring to FIG. 1, materials for a fuel cell electrode according to the present invention are provided as a fuel cell electrode on front and/or rear surfaces of an electrolyte membrane 1, and include catalyst particles formed by including precious metal particles 2 containing Pt in a porous inorganic material 3, and a proton-conductive substance (not shown). According to such fuel cell electrode materials, the precious metal particles 2 are included in the porous inorganic material 3 as shown by, for example, a TEM photograph of FIG. 3, which prevents Pt from dissolving into the electrolyte membrane 1, thereby making it possible to suppress deterioration in fuel cell performance caused by the Pt dissolution into the electrolyte membrane 1.

Note that, of the fuel cell electrode materials according to the present invention, the porous inorganic material 3 can be a material mainly containing any one of SiO₂, ZrO₂, and TiO₂. The porous inorganic material 3 is desirably proton conductive in order to function as a fuel cell electrode, and in this case, the use of, for example, a material exhibiting Lewis acidity (electron-pair acceptor) can further increase the proton conductivity of the porous inorganic material 3.

Furthermore, of the fuel cell electrode materials according to the present invention, the precious metal particles 2 desirably have a structure that substantially prevents Pt from dissolving into the electrolyte membrane 1 and that allows proton, oxygen, and water to pass through in order to form the fuel cell electrode. Moreover, the surface area of the precious metal particles decreases as a particle diameter of the precious metal particles increases. For example, a surface area of the precious metal particles in the case where the particle diameter thereof is 50 [nm] decreases to about 1/30 or less of a surface area of the precious metal particles in the case where the particle diameter thereof is 2 [nm]. Therefore, in order to avoid a cost increase of the fuel cell electrode materials caused by using a large amount of the precious metal particles, the particle diameter of the precious metal particles 2 is desirably within a range from 2 to 50 [nm]. Furthermore, a membrane thickness of the porous inorganic material 3 is desirably within a range from 2 to 50 [nm]. Moreover, a small pore diameter of the porous inorganic material 3 is desirably within a range from 1 to 10 [nm].

In addition, of the fuel cell electrode materials according to the present invention, the precious metal particles 2 are desirably connected to one another in wire form. Such a structure can exhibit conductivity without needing carbon supports, which prevents the Pt dissolution into the electrolyte membrane 1 caused by loss of the carbon supports. Furthermore, in order to further reduce the amount of use of the carbon supports, the wire length of the precious metal particles 2 is desirably 10 [nm] or more. Moreover, in order to collect electrons transferred by the precious metal particles 2, some of the precious metal particles 2 are desirably in contact with conductive particles 4 such as carbon, as shown in FIG. 2. The wire-form connection of Pt is obtained by, for example, any of the following two methods: one is a method of preparation under conditions of using a comparatively large proportion of water and surfactant in a reversed micelle method, and the other is a method of supporting Pt and SiO₂ with a material such as a carbon fiber that has a wire form and is burnable, and then burning down the material.

### EXAMPLES

Materials for a fuel cell electrode according to the present invention will be described in further detail based on examples.

### (Example 1)

In a example 1, at first, polyethyleneglycol - mono4 - nonylphenylether (NP5) was added as a surfactant to a cyclohexane solvent, and then a dinitro-diamine platinum solution diluted with ion exchange water was mixed, which was stirred for 2 hours, thereby preparing a reserved micelle solution containing Pt ions. Next, to the reversed micelle solution, sodium tetrahydroborate was added to metallize the Pt ions, thereby obtaining a reversed micelle solution containing Pt.

Subsequently, this reversed micelle solution containing Pt was stirred for 2 hours, thereafter water was added thereto, and TTEOS (tetraethoxysilane) was added and stirred for 2 hours. To collapse the reversed micelle, 500 [ml] of methanol is further added, and obtained precipitates were filtered and dried, and then baked at 150 [°C] in air atmosphere, thereby obtaining powder having Pt included in SiO₂ (hereinafter, referred to as Pt/SiO₂ inclusion powder). At last, graphitized carbon black was added to the Pt/SiO₂ inclusion powder, which was crashed and then dried in an argon flow. Note that in this example the Pt particle diameter in the Pt/SiO₂ inclusion powder was 5 [nm], and the SiO₂ membrane thickness and small pore diameter were 8 [nm] and 2 [nm], respectively. The Pt wire length was 20 [nm].

### (Example 2)

In a example 2, the quantities of the NP5 and the ion exchange water in the example 1 were changed so that the property of the Pt/SiO₂ inclusion powder would change. In this example 2, the Pt particle diameter in the Pt/SiO₂ inclusion powder was 5 [nm], and the SiO₂ membrane thickness and small pore diameter were 8 [nm] and 4 [nm], respectively. The Pt wire length was 50 [nm].

### (Example 3)

In a example 3, by replacing tetraethoxysilane in the example 1 with tetraethoxy zirconium, powder having Pt included in ZrO₂ (hereinafter, referred to as Pt/ZrO₂ inclusion powder) was obtained. Note that in this example 3, the Pt particle diameter in the Pt/ ZrO₂ inclusion powder was 5 [nm], and the ZrO₂ membrane thickness and small pore diameter were 12 [nm] and 4 [nm], respectively. The Pt wire length was 30 [nm].

### (Comparative Example 1)

In a comparative example 1, graphitized carbon black was added to a dinitro-diamine platinum solution, which was crashed and dried in an argon flow, thereby obtaining Pt/ C powder.

### (Comparative Example 2)

In a comparative example 2, SiO₂ powder was added to a dinitro-diamine platinum solution, which was dried and baked. Afterwards, graphitized carbon black was added, which was crashed and dried in an argon flow, thereby obtaining Pt/SiO₂ powder.

### (Experimental Results)

Each kind of powder obtained in the examples 1 to 3 and in the comparative examples 1 to 2 was added independently to aqua regia, and the quantity of Pt dissolving in the aqua regia was measured. The result found that, as in the Table 1 shown below, the proportion of Pt dissolution into the aqua regia in the examples 1 to 3 was 1 or less, and in contrast to this, the proportion of Pt dissolution into the aqua regia in the comparative examples 1 and 2 was large, which was 30 [%] and 50 [%], respectively. From this result, it became clear that the fuel cell electrode materials according to the examples 1 to 3 could prevent Pt from dissolving into the electrolyte membrane and suppress deterioration in fuel cell performance.

**[Table 1]**

| | POROUS INORGANIC MATERIAL | INCLUSION | Pt PARTICLE DIAMETER (nm) | INCLUSION MATERIAL (POROUS INORGANIC MATERIAL) THICKNESS (nm) | INCLUSION MATERIAL (POROUS INORGANIC MATERIAL) SMALL PORE DIAMETER (nm) | Pt WIRE LENGTH (nm) | PROPORTION OF Pt DISSOLUTION (%) |
|---|---|---|---|---|---|---|---|
| EXAMPLE 1 | SiO₂ | YES | 5 | 8 | 2 | 20 | 1 < |
| EXAMPLE 2 | SiO₂ | YES | 5 | 8 | 4 | 50 | 1 < |
| EXAMPLE 3 | ZrO₂ | YES | 5 | 12 | 4 | 30 | 1 < |
| COMPARATIVE EXAMPLE 1 | NONE | NONE | 2 | - | - | - | 50 |
| COMPARATIVE EXAMPLE 2 | SiO₂ | NONE | 2 | - | - | - | 30 |

Although the present invention made by the present inventors has been described in reference to its preferred embodiments, the statement and drawings consituting part of the disclosure of the present invention should bot be regarded as limiting the present invention. Various alternative embodiments, examples, and operation techniques made by those skilled in the art on the basis of the foregoing embodiments are, of course, within the scope of the present invention.

### INDUSTRIAL APPLICABILITY

According to materials for a fuel cell electrode and a fuel cell in the present invention, precious metal particles are included in a porous inorganic material, preventing dissolution of the precious metal particles and suppressing deterioration in fuel cell performance.

## Claims

1. Materials for a fuel cell electrode, comprising: catalyst particles formed by including precious metal particles containing Pt in a porous inorganic material; and a proton-conductive substance.

2. Materials for a fuel cell electrode, comprising: catalyst particles formed by including precious metal particles containing Pt in a porous inorganic material; conductive particles; and a proton-conductive substance.

3. The materials for a fuel cell electrode according to claim 1 or 2, wherein the porous inorganic material mainly contains any one of SiO₂, ZrO₂, and TiO₂.

4. The materials for a fuel cell electrode according to any one of claims 1 to 3, wherein the porous inorganic material is proton conductive.

5. The materials for a fuel cell electrode according to claim 4, wherein the porous inorganic material exhibits Lewis acidity.

6. The materials for a fuel cell electrode according to any one of claims 1 to 5, wherein the catalyst particles have a structure that substantially prevents Pt from dissolving into an external component and that allows proton, oxygen, and water to pass through.

7. The materials for a fuel cell electrode according to any one of claims 1 to 6, wherein a particle diameter of the precious metal particles is within a range from 2 to 50 [nm] and a membrane thickness of the porous inorganic material is within a range from 2 to 50 [nm].

8. The materials for a fuel cell electrode according to any one of claims 1 to 7, wherein a small pore diameter of the porous inorganic material is within a range from 1 to 10 [nm].

9. The materials for a fuel cell electrode according to any one of claims 1 to 8, wherein the precious metal particles are connected to one another in a wire form.

10. The materials for a fuel cell electrode according to claim 9, wherein a wire length of the precious metal particles is not less than 10 [nm].

11. The materials for a fuel cell electrode according to claim 9 or 10, wherein some of the precious metal particles are in contact with the conductive particles.

12. A fuel cell comprising: a fuel cell electrode formed of the fuel cell electrode materials according to any one of claims 1 to 11, the fuel cell electrode being provided on front and/or rear surfaces of an electrolyte membrane.
